Europäisches Patentamt

European Patent Office

Office européen des brevets

(11) Veröffentlichungsnummer : **0 356 416 B1**

(12) # EUROPÄISCHE PATENTSCHRIFT

(45) Veröffentlichungstag der Patentschrift :
**06.05.92 Patentblatt 92/19**

(51) Int. Cl.$^5$ : **F21V 5/06, F16B 45/04**

(21) Anmeldenummer : **89890189.7**

(22) Anmeldetag : **17.07.89**

(54) **Vorrichtung zum Aufhängen von Behängen auf Dekorationskörper, insbesondere Beleuchtungskörper.**

(30) Priorität : **22.08.88 AT 2068/88**

(43) Veröffentlichungstag der Anmeldung :
**28.02.90 Patentblatt 90/09**

(45) Bekanntmachung des Hinweises auf die
Patenterteilung :
**06.05.92 Patentblatt 92/19**

(84) Benannte Vertragsstaaten :
**BE CH DE ES FR GB IT LI SE**

(56) Entgegenhaltungen :
**US-A- 1 459 488**
**US-A- 2 530 518**
**US-A- 2 767 952**

(73) Patentinhaber : **Bakalowits, Friedhelm**
**Halirschgasse 17**
**A-1170 Wien (AT)**

(72) Erfinder : **Mechtler, Georg**
**Dingelstedtgasse 1/27**
**A-1150 Wien (AT)**

(74) Vertreter : **Köhler-Pavlik, Johann, Dipl.-Ing.**
**Margaretenplatz 5**
**A-1050 Wien (AT)**

EP 0 356 416 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 356 416 B1

## Beschreibung

Die Erfindung betrifft eine Vorrichtung zum Aufhängen eine Behanges oder eines Beleuchtungskörpers auf einen Dekorationskörper.

Es ist bekannt, Behänge auf Dekorationskörper, wie beispielsweise Luster, mittels Draht aufzuhängen, dessen Enden zusammengedreht werden. Diese Aufhängungen gestatten es nicht, die Behänge zum Zwecke ihrer Reinigung abnehmen zu können, was zu Schwierigkeiten bei Instandhaltungsarbeiten und Reinigungsarbeiten führt.

Durch die US-PS 1 459 488 ist eine für Gabeltragriemen von Geschirren gedachte Vorrichtung bekannt geworden, die aus einer Stange mit einem Einschnitt, in dem ein Ring eingehängt werden kann, und einer über die Stange verschiebbaren Hülse zur Herstellung einer lösbaren Verbindung besteht. Der Einschnitt ist L-förmig ausgeführt, wobei der längere Teil des Einschnitts parallel zur Stangenlängsachse verläuft. Ein in den Einschnitt eingehängter Ring bleibt nur in einer Ebene schwenkbar und kann insbesondere nicht gegenüber der Stange verdreht werden, d.h. Torsionsbewegungen ausführen. Diese Vorrichtung eigent sich nicht für den erfindungsgemäßen Zweck.

Aufgabe der Erfindung ist die Schaffung von Maßnahmen, durch welche der oben geschilderte Nachteil vermieden wird und die Behänge schwenkbar aufgehängt und zum Zweck der Reinigung oder Wartung bzw. Austausches vom Dekorationselement abgenommen und wieder aufgehängt werden können, wobei eine Sicherung zur Verhinderung eines ungewollten Heraustretens der Behänge aus ihren Aufhängungen gegeben ist.

Diese Aufgabe wird erfindungsgemäß bei einer Vorrichtung der eingangs erwähnten Art durch die Merkmale des Patentanspruches gelöst.

Die Bezeichnung Öse ist in ihrer weitesten Auslegung zu verstehen. So kann sie beispielsweise als geschlossener oder offener Ring ausgebildet sein. Sie hat lediglich die Aufgabe zu erfüllen, in diese den Haken einhängen und die Hülse mit ihren Schlitzen auf die Öse aufsetzen zu können.

Weitere Merkmale der Erfindung werden anhand der Zeichnung näher erläutert, in welcher ein Ausführungsbeispiel der erfindungsgemäßen Einrichtung dargestellt ist.

Es zeigen

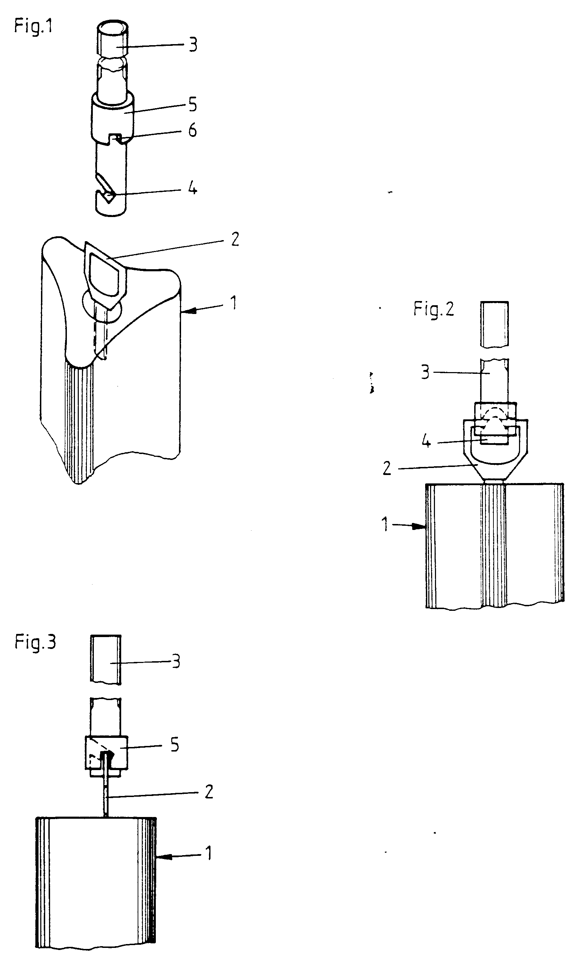

Fig. 1 eine schaubildliche Darstellung eines Behanges mit einer Tragstange, auf welcher eine Hülse längsverschiebbar aufgebracht ist, bei herausgehobenem Behang,

Fig. 2 eine Vorderansicht des Behanges in der aufgehängten und gesicherten Lage auf der Tragstange und

Fig. 3 eine Ansicht des Gegenstandes nach Fig. 2 in einer um 90° verschwenkten Lage.

1 bezeichnet einen Behang, im vorliegenden Fall einen im Querschnitt dreieckförmigen stabförmigen Körper, der an seinem oberen Ende eine, mit dem Körper z.B. durch Verschraubung, Lötung, Einschmelzung usw. verbundene Öse 2 besitzt, in die als Träger des Behanges eine Stange 3 mit einem als Haken 4 ausgebildeten Ende eingehängt ist. Der Behang 1 ist mit seiner Öse 2 im Haken 4 schwenkbar gelagert und gegen Herausfallen durch eine Hülse 5 gesichert, welche an ihrem unteren Rand mit zwei einander diametral gegenüberliegenden Schlitzen 6 versehen, auf der zylindrischen Stange 3 längsverschiebbar und drehbar gelagert ist.

Zur Befestigung des Behanges 1 auf der Stange 3 wird derselbe mit der Öse 2 in den Haken 4 eingehängt, worauf die Hülse 5 so weit abgesenkt wird, bis sie mit ihren Schlitzen 6 auf der Öse 2 aufsitzt, sodaß der Haken 4 aus der Öse 2 nicht ungewollt hinaustreten kann. Die Öse 2 und der Haken 4 sind so ausgebildet, daß der Behang 1 in seiner Gebrauchslage zumindest teilweise schwenkbar ist, sodaß er, wie jeder normale Behang auf einem Beleuchtungskörper, z.B. einem Luster, einer Applike od.dgl., frei schwingen kann. Zu diesem Zweck besteht die Öse 2 vorzugsweise, wie dargestellt, aus einem Blechrahmen, sodaß die Öse 2 infolge ihrer flachen Form auch eine Verdrehsicherung für den Behang 1 bildet. Hiezu hat der Haken 4 auch eine flächige oder linienförmige Auflage für die Öse 2, um zu verhindern, daß sich der Behang aus seiner Aufhängungslage nicht verdrehen, höchstens nur um die Auflage als Schwingachse senkrecht zu dieser schwingen kann. Der Behang ist vorzugsweise aus einem Kristall hergestellt, um die Strahlen eines nicht dargestellten Beleuchtungskörpers bzw. einer Lichtquelle durchlassen und außerdem rückstrahlen kann.

Soll der Behang 1 zum Zweck seiner Reinigung, seines Austausches oder seiner Wartung von der Stange 3 abgehoben werden, wird die Hülse 5 so weit angehoben, bis sie den Haken 4 freigibt, sodaß der Behang 1 von dem Haken 4 abgenommen werden kann.

## Patentansprüche

1. Einrichtung zum Aufhängen eine Behanges (1) oder Beleuchtungskörpers auf einen Dekorationskörper, insbesondere Luster, unter Verwendung von einer am Dekorationskörper befestigten, mit einem Haken (4) versehenen Tragstange (3) und einer an dem Behang (1) oder Beleuchtungskörper angebrachten, in Haken (4) einhängbaren Öse (2), die durch eine, auf der Tragstange (3) längsverschiebbaren Hülse (5) lösbar gesichert ist, wobei als Haken ein schräg nach unten verlaufender, gerader Einschnitt (4) in der Tragstange (3) vorgesehen ist, in den die Öse (2) mit einer in Gebrauchslage oben liegenden geraden Kante einhängbar ist, wodurch eine verdrehungssichere Ausrichtung erzielt wird und die Hülse (5) einander diametral gegenüberliegende, im Längsrichtung verlaufende gerade Schlitze (6) aufweist, mit welchen die Hülse (5) auf die in Gebrauchslage obere Außerkante der Öse (2) aufsetzbar ist, wobei der Behang in einer Ebene schwenkbar bleibt.

## Claims

1. An arrangement for hanging a pendant (1) or lighting member on a decorative body, in particular a chandelier, using a support rod (3) which is fixed to the decorative member and is provided with a hook (4), and using an eye (2) which can be suspended in the hook (4) and is attached to the pendant (1) or the lighting member, which eye is detachably secured by a sleeve (5) longitudinally displaceable on the support rod (3); a straight downwardly-extending incision (4) being provided in the support rod (3) to serve as a hook, in which incision the eye (2) can be suspended with a straight edge which is on top in the position of use, thereby achieving an arrangement secure against twisting; and the sleeve (5) having straight slots (6) diametrically opposite to each other and extending in longitudinal direction, with which slots the sleeve (5) can be placed on the outer edge of the eye (2), which is on top in the position of use, the pendant remaining pivotable in one plane.

## Revendications

1. Dispositif pour suspendre une pendeloque (1) ou des armatures lumineuses sur un article décoratif, notamment un lustre, avec utilisation d'une barre de support (3) fixée sur l'article décoratif et munie d'un crochet (4), et d'un oeillet (2) placé sur la pendeloque (1) ou l'armature lumineuse et pouvant être accroché au crochet (4), ledit oeillet étant arrêté, de manière mobile, par une gaine (5) pouvant effectuer un déplacement longitudinal sur la barre de support (3), ledit crochet se présentant sous la forme d'une entaille droite (4) dans la barre de support (3), permettant d'accrocher l'oeillet (2) présentant une arête dirigée vers le haut dans la position d'utilisation, ce qui permet d'obtenir une orientation protégée contre tout risque de torsion ; la gaine (5) présente des fentes droites (6) diamétralement opposées et orientées dans le sens longitudinal, grâce auxquelles la gaine (5) peut être posée sur l'arête extérieure orientée vers le haut en position d'utilisation de l'oeillet (2), et la pendeloque garde la possibilité de pivotement dans un même plan.

Fig.1

Fig.2

Fig.3